# EUROPEAN PATENT APPLICATION

(11) **EP 4 432 572 A1**
(43) Date of publication of application: **18.09.2024**
(21) Application number: 23162563.3
(22) Date of filing: 17.03.2023
(51) Int. Cl.: H04B 7/0452, H04B 7/06

(54) **WIRELESS TELECOMMUNICATIONS NETWORK**

(71) Applicant: British Telecommunications public limited company, London E1 8EE (GB)
(72) Inventor: BRICE, Henry, London, E1 8EE (GB); PAREKH, Arjun, London, E1 8EE (GB)
(74) Representative: British Telecommunications public limited company Intellectual Property Department

(57) **Abstract**

A method of configuring an access point in a wireless telecommunications network, and a network node for implementing said method, the wireless telecommunications network comprising a plurality of users, the method comprising the steps of: selecting, from a candidate beam set, a candidate beam for each user of the plurality of users; determining a count of selections for each candidate beam of the candidate beam set; determining a spread of the count of selections for each candidate beam of the candidate beam set; determining that an acceptance criterion for the candidate beam set has been met, the acceptance criterion being based on the spread of the count of selections for each candidate beam of the candidate beam set; and causing the access point to use the candidate beam set.

## Description

### Field of the Invention

The present invention relates to a wireless telecommunications network.

### Background

An access point in a wireless telecommunications network having an antenna array may use a beamforming technique. The antenna array comprises a plurality of antenna elements that may be controlled to form a narrow beam (relative to a beam achievable by a single antenna element) by controlling the phase shifts and/or amplitude of signals transmitted by each antenna element.

The 5th Generation (5G) cellular telecommunications protocol, as standardised by the 3^{rd} Generation Partnership Project (3GPP), defines the number of beams that may be transmitted by a base station as a function of the frequency. Four beams are used for communications below 3GHz, eight beams are used for communications between 3GHz and 6GHz, and sixty-four beams are used for communications over 6GHz. Each beam has a unique coverage area characterised by its azimuth angle, elevation angle, depth and width.

A downlink synchronisation process is defined for User Equipment (UE) to identify the beam (or plurality of beams) of the base station to use for communications. In this downlink synchronisation process, the base station may transmit a particular beam of a plurality of beams in a corresponding timeslot. The UE reports the signal strength of each beam in its respective timeslot, and the beam (or beams) having the greatest signal strength are thereafter used for communications with the UE.

### Summary of the Invention

According to a first aspect of the invention, there is provided a method of configuring an access point in a wireless telecommunications network, the wireless telecommunications network comprising a plurality of users, the method comprising the steps of: selecting, from a candidate beam set, a candidate beam for each user of the plurality of users; determining a count of selections for each candidate beam of the candidate beam set; determining a spread of the count of selections for each candidate beam of the candidate beam set; determining that an acceptance criterion for the candidate beam set has been met, the acceptance criterion being based on the spread of the count of selections for each candidate beam of the candidate beam set; and causing the access point to use the candidate beam set.

The spread may be a range or a standard deviation.

The acceptance criterion may be that the spread of the count of selections for each candidate beam of the candidate beam set meets a first spread threshold.

The candidate beam set may be one of a plurality of candidate beam sets and, repeating iteratively for each candidate beam set of the plurality of candidate beam sets the steps of: selecting, from a candidate beam set, a candidate beam for each user of the plurality of users, determining a count of selections for each candidate beam of the candidate beam set, and determining a spread of the count of selections for each candidate beam of the candidate beam set, until a termination condition is met.

The termination condition may be that the acceptance criterion has been met for the candidate beam set for a current iteration, the acceptance criterion being that the spread of the count of selections for each candidate beam of the candidate beam set of the current iteration meets the first spread threshold, and the step of causing the access point to use the candidate beam set may be to use the candidate beam set of the current iteration.

The step of determining that the acceptance criterion has been met may be performed in each iteration, the acceptance criterion may be that the spread of the count of selections for each candidate beam of the candidate beam set of a current iteration is between a first and second range threshold, and the termination condition may be that a count of iterations meets an iteration threshold, and the step of causing the access point to use the candidate beam set may be to use the candidate beam set of any iteration which meets the acceptance criterion.

The step of selecting, from the candidate beam set, a candidate beam for each user of the plurality of users may comprise the steps of: determining a signal strength value for each candidate beam of the candidate beam set for each user of the plurality of users; and selecting, from the candidate beam set, a candidate beam for each user of the plurality of users having the greatest signal strength value.

The step of determining the signal strength value for each candidate beam of the candidate beam set for each user of the plurality of users may comprise the steps of: defining a coverage area grid for the access point, the coverage area grid having a plurality of cells; determining a location of each user of the plurality of users; determining a signal strength value for each candidate beam of the candidate beam set in each cell of the coverage area grid; and determining the signal strength value for each candidate beam of the candidate beam set for each user of the plurality of users by: identifying the cell of the coverage area grid corresponding with the location of that user, and determining the signal strength value for each candidate beam of the candidate beam set for the identified cell.

The step of determining the signal strength value for each candidate beam of the candidate beam set for each user of the plurality of users may be based on a simulated signal strength value.

The step of determining the signal strength value for each candidate beam of the candidate beam set for each user of the plurality of users may be further based on signal strength measurements of each candidate beam of the candidate beam set from one or more users of the plurality of users.

The step of causing the access point to use the candidate active beam set may be performed in each iteration.

According to a second aspect of the invention, there is provided a computer program comprising instructions which, when the program is executed by a computer, cause the computer to carry out the steps of the first aspect of the invention. The computer program may be stored on a computer readable carrier medium.

According to a third aspect of the invention, there is provided a network node comprising a processor configured to perform the steps of the first aspect of the invention. The network node may be the access point.

### Brief Description of the Figures

In order that the present invention may be better understood, embodiments thereof will now be described, by way of example only, with reference to the accompanying drawings in which:
Figure 1 is a schematic diagram of a cellular telecommunications network, in an initial state;
Figure 2 is a diagram of a timeframe used in communications in the network of Figure 1;
Figure 3 is a flow diagram illustrating a downlink synchronisation process;
Figure 4 is a flow diagram illustrating a process for updating an active beam set used in the process of Figure 3;
Figure 5 is a diagram illustrating a geographical area of the network of Figure 1, illustrating the location of a base station of the network;
Figure 6 is a graph illustrating signal strength in the geographical area for a beam of the base station of the network of Figure 1;
Figure 7 is a diagram illustrating the geographical area of the network of Figure 1, illustrating the locations of the plurality of UE of the network; and
Figure 8 is a graph illustrating a simulated annealing process used in the process of Figure 4; and
Figure 9 is a schematic diagram of the network of Figure 1, in a subsequent state.

### Detailed Description

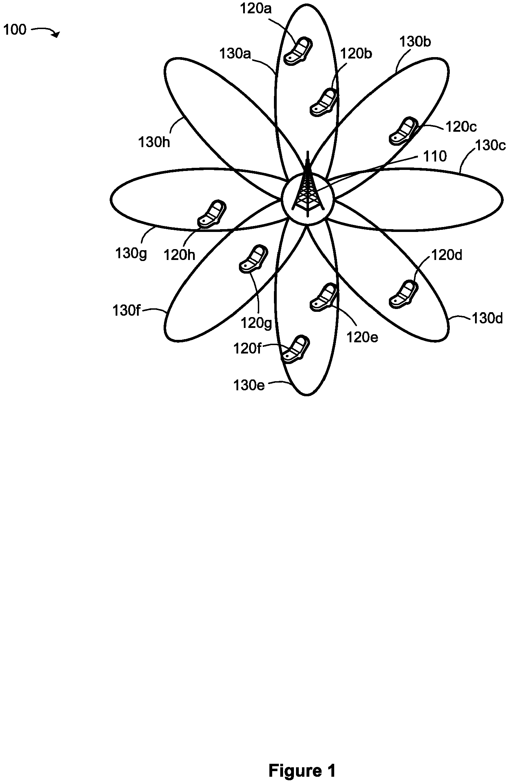

Figure 1 illustrates a cellular telecommunications network 100. The cellular telecommunications network includes a base station 110 and a plurality of User Equipment (UE) 120a, 120b, 120c, 120d, 120e, 120f, 120g, 120h (collectively 120). The cellular telecommunications network 100 is configured for communications according to the 5^{th} Generation ("5G") cellular telecommunications protocol, as standardised by the 3^{rd} Generation Partnership Project ("3GPP"). The base station 110 includes an antenna array and implements a beamforming technique so as to transmit a plurality of beams 130a, 130b, 130c, 130d, 130e, 130f, 130g, 130h (collectively, 130). In this example, the base station 110 and each UE of the plurality of UE 120 are configured for communications at a frequency between 3GHz and 6GHz, such that the antenna array transmits eight beams and one of these beams is selected for each UE of the plurality of UE 120 for communication between the UE and base station 110.

Figure 1 illustrates the plurality of beams 130 of the base station 110 being transmitted at regularly spaced intervals such that each beam is transmitted in a unique direction from the base station 110 and has a unique coverage area. Figure 1 illustrates the eight beams in a two-dimensional space, in which the regular spacing of the beams is a 45-degree azimuthal angular spacing. For simplicity, all other characteristics of the beam (such as elevation angle, width, and depth) are the same.

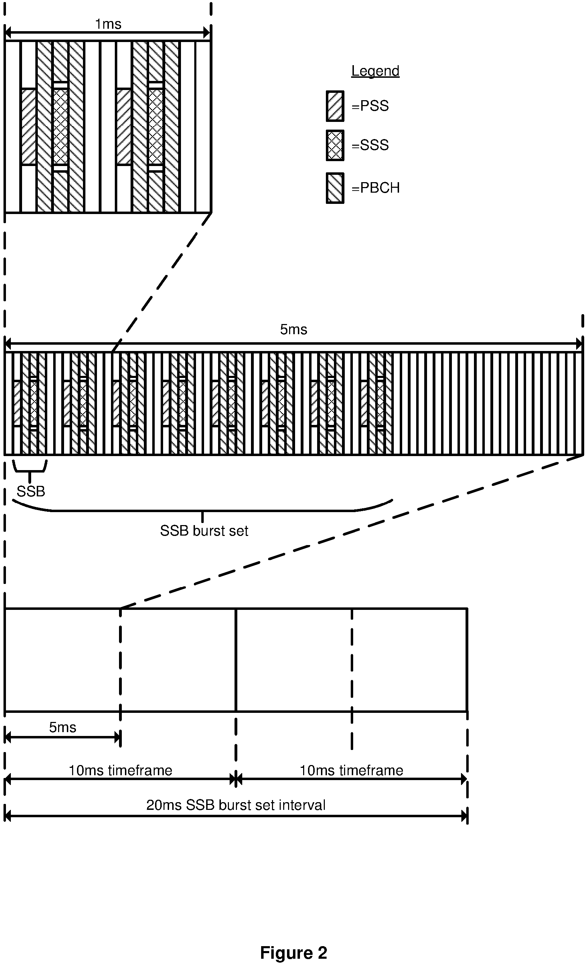

Figure 2 illustrates a timeframe structure of transmissions in the 5G cellular telecommunications protocol. The lowermost diagram of Figure 2 illustrates a plurality of timeframes each being 10ms in length and consisting of 10 subframes (each 1ms in length). Each subframe consists of 1 timeslot (but may be configured as having 1, 2, 4, 8 or 16 timeslots, depending on the subcarrier spacing).

Figure 2 also illustrates a Synchronisation Signal (SS) Block (SSB) and its position in the timeframe. The SSB consists of a Primary SS (PSS), Secondary SS (SSS) and a Physical Broadcast Channel (PBCH). An SSB burst set is defined comprising a plurality of SSBs (8 SSBs in this example in which the base station 110 and plurality of UE 120 communicate at a frequency between 3GHz and 6GHz). The SSB burst set is transmitted at regular 20ms intervals (but may be configured for transmission at 5, 10, 20, 40, 80 and 160 ms intervals). In the first 5ms of each SSB burst set interval, the SSBs of the SSB burst set are serially transmitted, in which each SSB is transmitted in a particular beam of the plurality of beams. Each SSB is mapped to the particular beam of the plurality of beams (e.g. by configuring the antenna array to apply weights to each antenna element) so as to transmit a beam comprising the SSB in a particular direction. This process is known as a "beam sweep" as each SSB in the SSB burst set is transmitted in a particular beam having a unique coverage area. Each beam is therefore identifiable based on an identifier of the SSB, such as the SSB index.

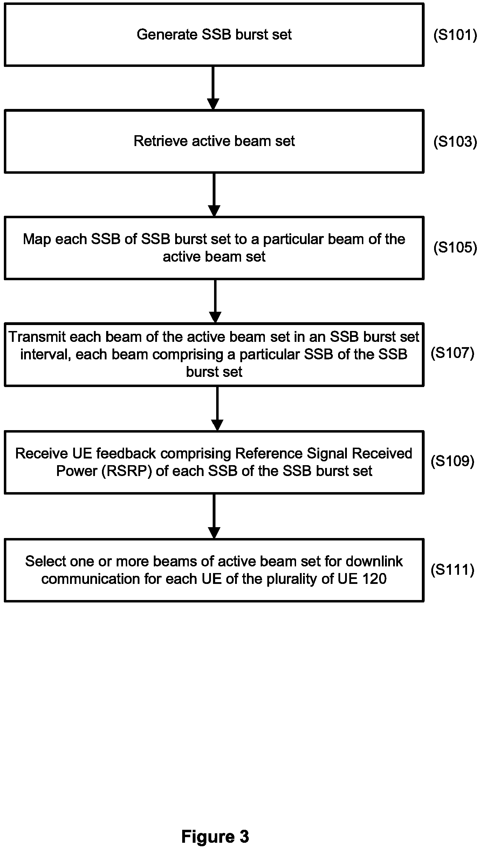

A downlink synchronisation process will now be described with reference to the cellular telecommunications network 100 illustrated in Figure 1 and the flow diagram of Figure 3. Figure 1 illustrates the network in an initial state. The following table indicates the serving beam of the plurality of beams 130 for each UE of the plurality of UE 120 in the initial state of the network 100 illustrated in Figure 1:

**Table 1: Serving beam for each UE of the plurality of UE 120 in the initial state of the network 100 illustrated in Figure 1**

| **UE** | **Serving Beam** |
|---|---|
| 120a | 130a |
| 120b | 130a |
| 120c | 130b |
| 120d | 130d |
| 120e | 130e |
| 120f | 130e |
| 120g | 130f |
| 120h | 130g |

In a first step, S101, of the process illustrated in Figure 3, the base station 110 generates an SSB burst set comprising a plurality of SSBs (eight SSBs in this example). In step S103, the base station 110 retrieves an active beam set. The active beam set is retrieved from a beam database, which stores data on each candidate beam that may be transmitted by the base station 110. Each candidate beam has a unique coverage area when transmitted by the base station. The beam database includes, for each candidate beam, an identifier field, one or more transmission property fields (in this example, an azimuthal angle field), a default beam field and an active beam field. In an example, the beam database may define 16 candidate beams, such as:

**Table 2: Table illustrating data stored for each candidate beam in the beam database of base station 110**

| **Beam Identifier** | **Azimuthal Angle (degrees)** | **Default beam?** | **Active beam?** |
|---|---|---|---|
| 0 | 0 | TRUE | TRUE |
| 1 | 22.5 | FALSE | FALSE |
| 2 | 45 | TRUE | TRUE |
| 3 | 67.5 | FALSE | FALSE |
| 4 | 90 | TRUE | TRUE |
| 5 | 112.5 | FALSE | FALSE |
| 6 | 135 | TRUE | TRUE |
| 7 | 157.5 | FALSE | FALSE |
| 8 | 180 | TRUE | TRUE |
| 9 | 202.5 | FALSE | FALSE |
| 10 | 225 | TRUE | TRUE |
| 11 | 247.5 | FALSE | FALSE |
| 12 | 270 | TRUE | TRUE |
| 13 | 292.5 | FALSE | FALSE |
| 14 | 315 | TRUE | TRUE |
| 15 | 337.5 | FALSE | FALSE |

In step S103, the base station 110 retrieves the active beam set from the beam database, including the beam identifier and the one or more transmission properties (the azimuthal angle in this example), of each candidate beam in the beam database having a TRUE active beam field. In this example, the active beam set comprises the candidate beams having beam identifiers 0, 2, 4, 6, 8, 10, 12 and 14 (having corresponding azimuthal angles 0-degrees, 45-degrees, 90-degrees, 135-degrees, 180-degrees, 225-degrees, 270-degrees and 315-degrees).

The active beam set is described in more detail below.

In step S105, the base station 110 maps each SSB of the SSB burst set to a particular beam of the active beam set. This mapping process comprises determining, for each beam of the active beam set, the configuration parameters of the base station (e.g. the weights to apply to each antenna element of the antenna array) so as to transmit the beam with the corresponding transmission properties (as retrieved in step S103).

In step S107, the base station 110 is configured to transmit each beam of the active beam set in each SSB burst set interval, each beam comprising a particular SSB of the SSB burst set.

Each UE of the plurality of UE identifies each SSB of the SSB burst set by its SSB index, estimates each SSB's Reference Signal Received Power (RSRP), and reports these measurements to the base station 110.

In step S109, the base station 110 receives feedback from each UE of the plurality of UE 120. This feedback comprises the RSRP estimate of each SSB of the SSB burst set. In step S111, one or more beams of the active beam set is selected for downlink communication for each UE of the plurality of UE based on these RSRP estimates. The RSRP estimates may also be used as part of the process for updating the active beam set (described later in this description).

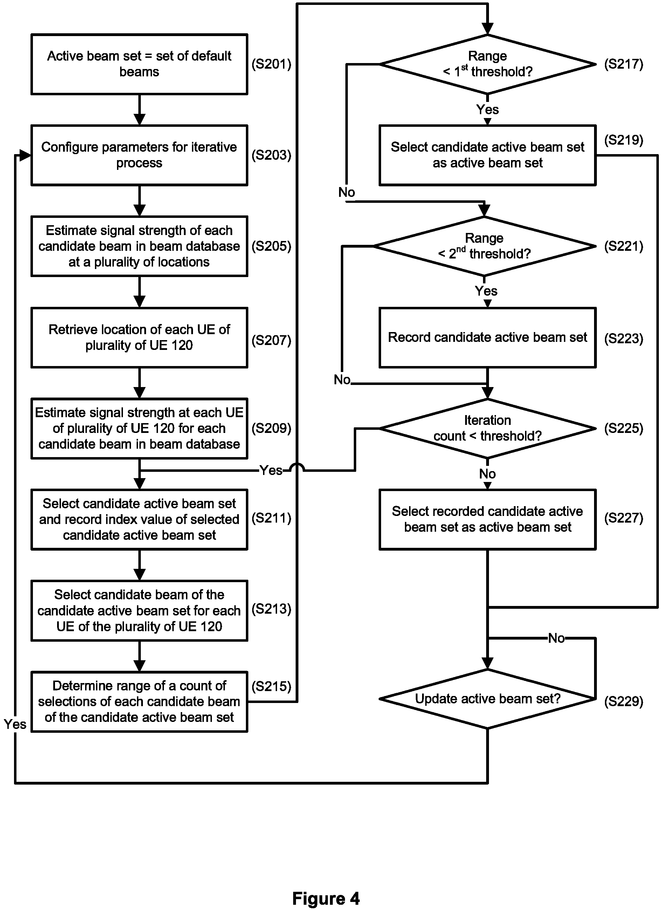

Figure 4 illustrates a process for updating the active beam set which, in this example, is performed by the base station 110. As discussed above, the beam database stores information on all candidate beams that may be transmitted by the base station 110, and the active beam set is the set of these candidate beams that have value TRUE for the 'active beam' field. The beam database also identifies a set of default beams (those candidate beams having value TRUE for the 'default beam' field), which are used to define the active beam set during an initialisation or reset phase. Step S201 represents an initialisation or reset step, in which the active beam set is defined as the set of default beams by updating the 'active beam' field to TRUE for those candidate beams forming the set of default beams and updating the 'active beam' field to FALSE for those candidate beams not forming the set of default beams.

An iterative process is used to update the active beam set. In step S203, the base station 110 sets configuration values for the iterative process, including a maximum step size, a maximum number of iterations, a first range threshold, and a second range threshold. These will become clear to the reader on review of the following description.

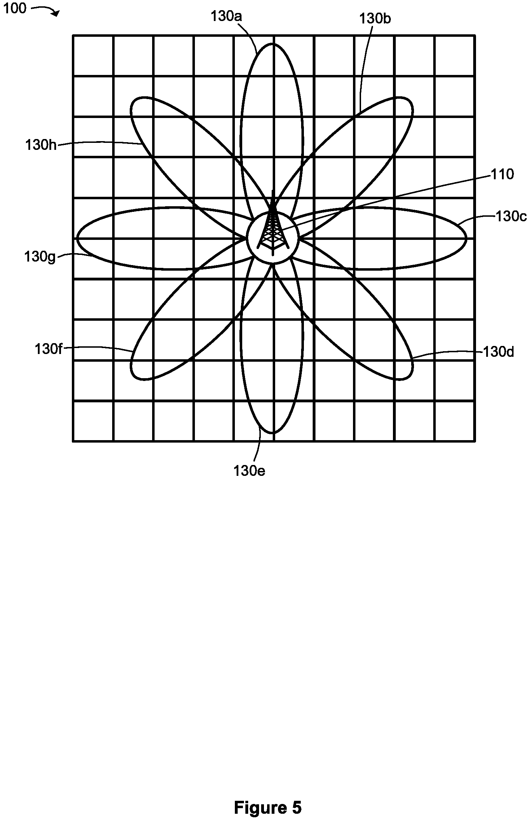

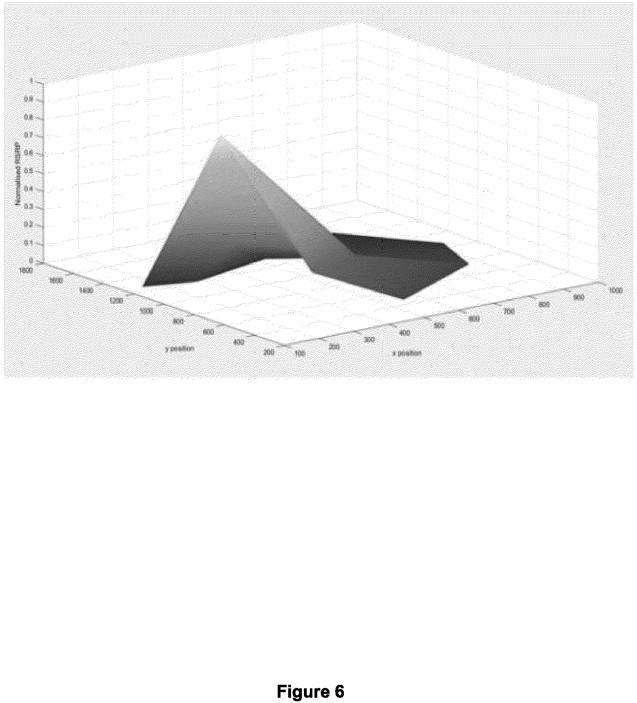

In step S205, the base station 110 estimates a signal strength (e.g. RSRP) of each candidate beam in the beam database at a plurality of locations in a geographical area. In this example, the geographical area (as illustrated in Figure 5) is an area that covers some or all of the coverage area of the base station 110 and is divided into a grid of unit cells in which each unit cell is identifiable (e.g. by an x-coordinate and a y-coordinate). The base station 110 then performs a simulation process for each candidate beam in the beam database in which the signal strength of the candidate beam is estimated in each unit cell of the geographical area. The simulation process may be based on an inverse square propagation model, or may be more complicated and based on a radio frequency simulator. These signal strength values for each candidate beam in the beam database in each unit cell of the geographical area are stored for subsequent analysis. A graphical representation of the estimated signal strength values for a candidate beam is illustrated in Figure 6.

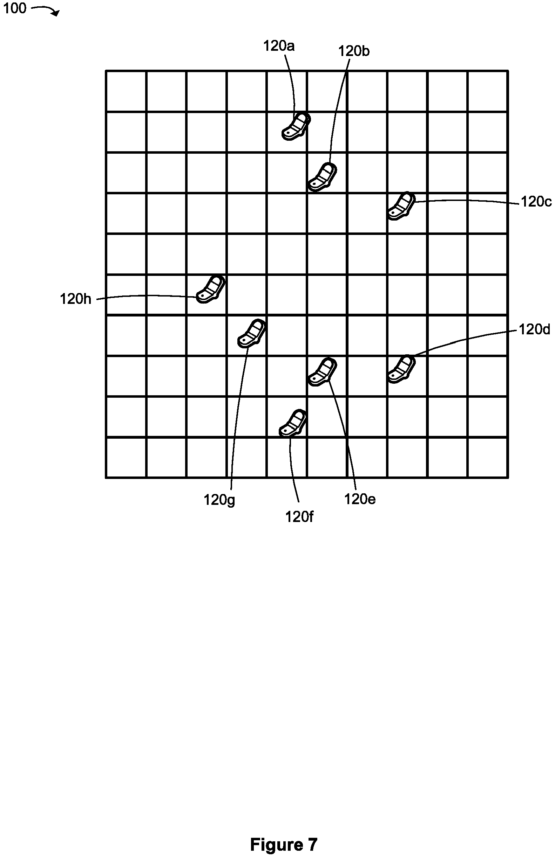

In step S207, the base station 110 retrieves a location of each UE of the plurality of UE. This location data identifies the location of each UE in a particular unit cell of the geographical area (or may be in another format which may then be processed by the base station 110 to identify the corresponding unit cell of the geographical area). Figure 7 illustrates the location of each UE relative to the grid of unit cells.

In step S209, the base station 110 estimates the signal strength value for each UE of the plurality of UE for each candidate beam in the beam database. This may be estimated by retrieving the estimated signal strength value for each candidate beam for the unit cell in which the UE is located. These estimated signal strength values for each UE are stored for subsequent analysis. More specifically, a matrix *X* is defined having *n* rows each representing a candidate beam of the beam database and *m* columns each representing a UE of the plurality of UE. Each matrix element represents the signal strength value of the *m*-th UE in the *n*-th candidate beam (that is, the estimated signal strength value for the *n*-th candidate beam in the unit cell in which the *m*-th UE is located).

In step S211, the base station 110 enters the iterative process and selects a candidate active beam set. The candidate active beam set is a combination of 8 candidate beams from the 16 candidate beams that may be transmitted by the base station 110 (such that there are 12870 unique candidate active beam sets). These candidate active beam sets are recorded in memory and are each associated with a unique index. In a first iteration of step S211, the base station 110 selects a candidate active beam set at random and records the index value of the candidate active beam set for the current iteration.

In step S213, the base station 110 selects a candidate beam of the candidate active beam set for each UE of the plurality of UE, the selected candidate beam of the candidate active beam set being the candidate beam having the greatest estimated signal strength value (as determined in step S209). More specifically, the base station 110 defines a matrix *Y,* being a subset of matrix *X,* having *r* rows each representing a candidate beam of the active beam set and *m* columns each representing a UE of the plurality of UE. The matrix elements of matrix *Y* are populated with the corresponding values from matrix *X.* A candidate beam of the active beam set is selected for each UE based on the beam (that is, row *n*) having the maximum signal strength value. A vector, *vⱼ*, is defined in which each vector value is the selected candidate beam for the *j*-th UE of the plurality of UE (*j* therefore represents a count of UE in the plurality of UE).

In step S215, the base station 110 determines a range of a count of selections of each candidate beam of the candidate active beam set. More specifically, the base station 110 defines vector *z_{d}*, in which each vector value is a count of candidate beam *d* in vector *vⱼ* (in which *d*=1...*r*). A range of the count of selections of each candidate beam of the active beam set is then calculated as the maximum of vector *z_{d}* minus a minimum of vector *z_{d}*.

The range value determined in step S215 may be defined as a "beam distribution" and represents how evenly the plurality of UE 120 would be served by the candidate active beam set. That is, a candidate active beam set having relatively low beam distribution is indicative of the plurality of UE 120 being more evenly served by the candidate active beam set relative to another candidate active beam set having a relatively high beam distribution.

In step S217, the base station 110 determines whether a first termination condition has been met. In this example, the first termination condition is based on whether the range value determined in step S215 is less than a first range threshold. If the range value is less than the first range threshold, then, in step S219, the candidate active beam set is selected as the active beam set (in which case the beam database is updated by setting the 'active beam' field to TRUE for those candidate beams forming the candidate active beam set and updating the 'active beam' field to FALSE for those candidate beams not forming the candidate active beam set). The method then proceeds to step S229.

If the first termination condition is not met, then, in step S221 it is determined whether the range value determined in step S215 is between the first range threshold and a second range threshold. If the range value is between the first and second range thresholds, then, in step S223 the candidate active beam set is recorded. The recorded candidate active beam set overwrites any previously recorded candidate active beam set from a previous iteration (if applicable). If the range value is greater than the second range threshold, then the process proceeds to step S225 without recording the candidate active beam set (and any previously recorded candidate active beam set is unaffected, if applicable).

In step S225, the base station 110 determines whether a second termination condition is met. The second termination condition is a determination of whether an iteration count meets the maximum number of iterations threshold. If the second termination condition is met, then in step S227, the base station 110 selects the recorded candidate active beam set from step S223 as the active beam set (in which case the beam database is updated by setting the 'active beam' field to TRUE for those candidate beams forming the recorded candidate active beam set and updating the 'active beam' field to FALSE for those candidate beams not forming the recorded candidate active beam set).

If the second termination condition is not met, then the process loops back to step S211 in which the base station 110 selects a further candidate active beam set. In the first iteration of step S211, the candidate active beam was selected at random and the index value of the selected candidate active beam set was recorded. In each subsequent iteration of step S211, the candidate active beam set is selected through a simulated annealing process in which the index value of the candidate active beam set for an iteration is selected randomly from a range of index values, the range of index values being the index value of the candidate active beam set selected in the previous iteration plus and minus the maximum step size defined in step S203.

In each of these further iterations, the candidate active beam set for that iteration is analysed to determine a range value (as determined in step S215 of that iteration) for that candidate active beam set. These iterative steps continue until either the first or second termination condition is met and the active beam set is selected.

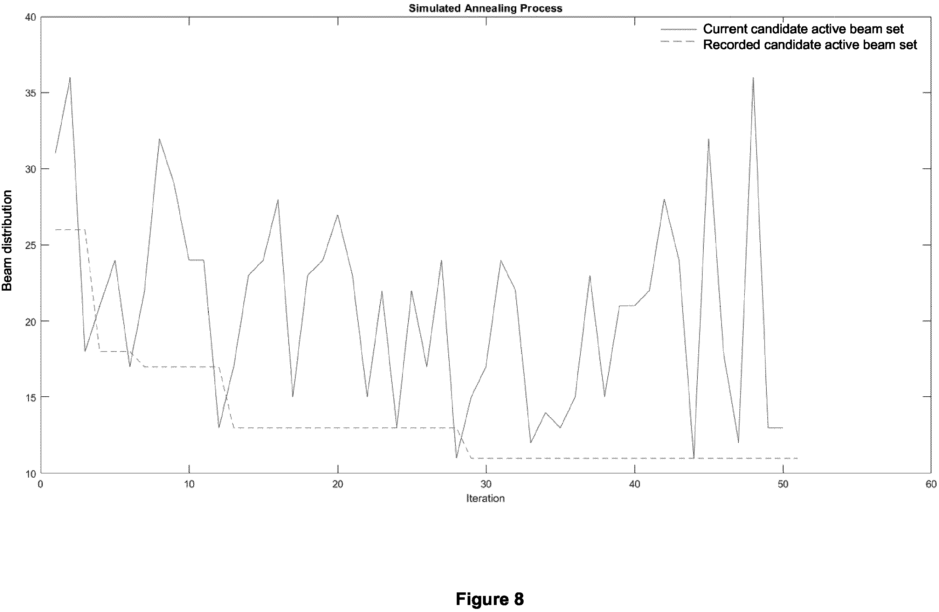

Figure 8 is a graphical representation of the simulated annealing process, which illustrates the beam distribution for a candidate active beam set of each iteration and the beam distribution of the recorded candidate active beam set in each iteration. In this example, the candidate active beam set recorded in iteration 28 of the process is selected as the active beam set once the process meets the maximum iteration threshold.

The active beam set is thereafter used for all subsequent performances of the downlink synchronisation process (as described above with reference to Figure 3) until it is determined that the active beam set should be updated. That is, in step S229, the process reverts to step S203 in which the configuration parameters are optionally reconfigured.

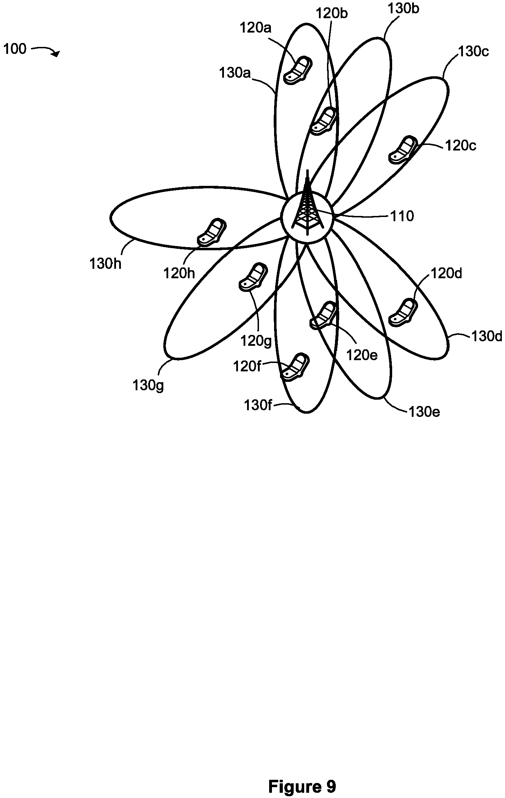

Figure 9 illustrates the cellular telecommunications network 100 in a subsequent state following selection of the active beam set. The following table indicates the serving beam of the plurality of beams 130 for each UE of the plurality of UE 120 in the subsequent state of the network 100 illustrated in Figure 9:

**Table 3: Serving beam for each UE of the plurality of UE 120 in the subsequent state of the network 100 illustrated in Figure 9**

| **UE** | **Serving Beam** |
|---|---|
| 120a | 130a |
| 120b | 130b |
| 120c | 130c |
| 120d | 130d |
| 120e | 130e |
| 120f | 130f |
| 120g | 130g |
| 120h | 130h |

By comparing the initial and subsequent states of the network 100, it can be seen that the plurality of UE 120 are more evenly served by the plurality of beams 130 of the base station 100 as a result of implementing the process of Figure 4. Furthermore, the active beam set is regularly updated, such that the active beam set is selected for the most recent UE locations.

In step S205 of Figure 4, the signal strength of each candidate beam in the beam database is estimated to form matrix *X* prior to entering the iterative loop. However, this is non-essential and the signal strength of each candidate beam of the candidate active beam set may be determined in each iteration of the iterative loop (e.g. as part of step S213 in which the base station 110 selects a candidate beam of the candidate active beam set for each UE of the plurality of UE 120).

Furthermore, in step S205, the signal strength of each candidate beam in the beam database is estimated at a plurality of locations. A geographical area divided into unit cells was used to illustrate this estimation step. However, it is non-essential that this estimation step uses unit cells of equal area. Instead, the geographical area may be non-uniformly divided into cells of unequal area (e.g. where indoor portions of the geographical area use smaller area cells relative to the cells of outdoor portions of the geographical area).

In step S109 of Figure 3, the base station 110 receives feedback (including the signal strength of each beam of the active beam set) from each UE which is used to select one or more beams of the active beam set for downlink communication. This feedback may also be used to improve the active beam set updating process of Figure 4. That is, step S205 involves the estimation of the signal strength of each candidate beam at a plurality of locations (which is used to estimate the signal strength at each UE for each candidate beam in step S209). The measured signal strength value at each location and/or at each UE may be compared to the corresponding estimated signal strength value at each location and/or at each UE. This difference value may then be used to improve the simulation model of step S205 (i.e. update the simulation model such that its estimates more accurately reflect the UE feedback).

Furthermore, the UE feedback may be used to replace the estimation steps of the process of Figure 4. That is, steps S205 to S209 could be removed and step S211 may instead involve the base station 110 using a candidate active beam set. On receipt of the UE feedback, the base station 110 may then determine whether the first or second termination conditions have been met and, if not, then a further candidate active beam set may be used in the next iteration. This implementation would be suitable for near-real-time implementations.

The active beam set update process of Figure 4 above determines a range of a count of selections of each candidate beam of the candidate active beam set, and a candidate active beam set is selected if the range is less than the first or second range threshold. In this context, the range is the difference between the number of UE served by the beam that serves that serves the most UE minus the number of UE served by the beam that serves the least UE. This has the benefit of ensuring that the plurality of UE are evenly served by the plurality of beams. However, this is non-essential and other measures of spread or variability in the beam selection dataset may be used. For example, a standard deviation of the count of selections of each candidate beam of the candidate active beam set may be used.

In step S207 above, the location of each UE of the plurality of UE is retrieved. This data may be obtained from an external source, or may be stored locally following performance of a UE positioning scheme (e.g. Global Navigation Satellite System (GNSS) positioning or Time of Arrival (ToA) positioning). This data is also periodically updated. Following an update in the UE location data, matrix *X* is updated such that the matrix elements (representing the estimated signal strength value for the *m*-th UE of the plurality of UE for the *n*-th candidate beam in the beam database) are estimated for the updated UE locations.

The example above describes a base station 100 configured for communication using 8 beams. However, this is non-essential and the number of beams in the plurality of beams may differ (e.g. 4 or 64). Any change in the number of beams in the plurality of beams changes the number of candidate active beam sets that must be analysed. Furthermore, the network comprising eight UE is merely an example, and the network may comprise any number of UE.

The beam database stores data on each candidate beam that may be transmitted by the base station 100 having a unique coverage area. In the above example, these candidate beams had different coverage areas due to different azimuthal angle. However, the skilled person will understand that the candidate beams may have different coverage areas due to differences in other transmission properties, such as elevation angle, width and depth. Each additional transmission property increases the number of candidate beams in the beam database, and therefore increases the number of candidate active beam sets (being a unique combination of the candidate beams in the beam database).

If the second termination condition is met, then the base station 110 selects the recorded candidate active beam set from step S223 as the active beam set. In the example above, the recorded candidate active beam set is the most recent candidate active beam set that has been recorded. However, the skilled person will understand that any candidate active beam set that meets the requirement(s) to be recorded may be used.

The skilled person will also understand that it is non-essential that the processes of Figures 3 and 4 are performed by the base station 100. A network controller may instead implement the processes, and cause the base station 100 to use the selected active beam set.

The skilled person will also understand that the combination of the first and second termination conditions is non-essential. The first or second termination condition may be used in isolation.

It is also non-essential to implement a simulated annealing process. Instead, all candidate active beam sets (or a selected subset of the candidate active beam sets) may be analysed instead. The simulated annealing process is a faster method of identifying a suitable active beam set.

The skilled person will also understand that the above processes may be used to determine an active beam set for an access point of any wireless telecommunications network that implements beamforming.

The skilled person will understand that any combination of features is possible within the scope of the invention, as claimed.

## Claims

1. A method of configuring an access point in a wireless telecommunications network, the wireless telecommunications network comprising a plurality of users, the method comprising the steps of:
selecting, from a candidate beam set, a candidate beam for each user of the plurality of users;
determining a count of selections for each candidate beam of the candidate beam set;
determining a spread of the count of selections for each candidate beam of the candidate beam set;
determining that an acceptance criterion for the candidate beam set has been met, the acceptance criterion being based on the spread of the count of selections for each candidate beam of the candidate beam set; and
causing the access point to use the candidate beam set.

2. A method as claimed in Claim 1, wherein the spread is a range.

3. A method as claimed in Claim 1 or Claim 2, wherein the acceptance criterion is that the spread of the count of selections for each candidate beam of the candidate beam set meets a first spread threshold.

4. A method as claimed in Claim 1 or Claim 2, wherein the candidate beam set is one of a plurality of candidate beam sets and, repeating iteratively for each candidate beam set of the plurality of candidate beam sets the steps of:
selecting, from a candidate beam set, a candidate beam for each user of the plurality of users,
determining a count of selections for each candidate beam of the candidate beam set, and
determining a spread of the count of selections for each candidate beam of the candidate beam set,
until a termination condition is met.

5. A method as claimed in Claim 4, wherein the termination condition is that the acceptance criterion has been met for the candidate beam set for a current iteration, the acceptance criterion being that the spread of the count of selections for each candidate beam of the candidate beam set of the current iteration meets the first spread threshold, and the step of causing the access point to use the candidate beam set is to use the candidate beam set of the current iteration.

6. A method as claimed in Claim 4, wherein the step of determining that the acceptance criterion has been met is performed in each iteration, the acceptance criterion being that the spread of the count of selections for each candidate beam of the candidate beam set of a current iteration is between a first and second range threshold, and the termination condition is that a count of iterations meets an iteration threshold, and the step of causing the access point to use the candidate beam set is to use the candidate beam set of any iteration which meets the acceptance criterion.

7. A method as claimed in any preceding claim, wherein the step of selecting, from the candidate beam set, a candidate beam for each user of the plurality of users comprises the steps of:
determining a signal strength value for each candidate beam of the candidate beam set for each user of the plurality of users; and
selecting, from the candidate beam set, a candidate beam for each user of the plurality of users having the greatest signal strength value.

8. A method as claimed in Claim 7, wherein the step of determining the signal strength value for each candidate beam of the candidate beam set for each user of the plurality of users comprises the steps of:
defining a coverage area grid for the access point, the coverage area grid having a plurality of cells;
determining a location of each user of the plurality of users;
determining a signal strength value for each candidate beam of the candidate beam set in each cell of the coverage area grid; and
determining the signal strength value for each candidate beam of the candidate beam set for each user of the plurality of users by:
identifying the cell of the coverage area grid corresponding with the location of that user, and
determining the signal strength value for each candidate beam of the candidate beam set for the identified cell.

9. A method as claimed in Claim 7 or Claim 8, wherein the step of determining the signal strength value for each candidate beam of the candidate beam set for each user of the plurality of users is based on a simulated signal strength value.

10. A method as claimed in Claim 9, wherein the step of determining the signal strength value for each candidate beam of the candidate beam set for each user of the plurality of users is further based on signal strength measurements of each candidate beam of the candidate beam set from one or more users of the plurality of users.

11. A method as claimed in Claim 4, wherein the step of causing the access point to use the candidate active beam set is performed in each iteration.

12. A computer program comprising instructions which, when the program is executed by a computer, cause the computer to carry out the steps of any one of Claims 1 to 11.

13. A computer readable carrier medium comprising the computer program of Claim 12.

14. A network node comprising a processor configured to perform the steps of any one of Claims 1 to 11.

15. A network node as claimed in Claim 14, being the access point.
